# EUROPÄISCHE PATENTSCHRIFT

(11) **EP 0 628 454 B1**
(45) Veröffentlichungstag und Bekanntmachung des Hinweises auf die Patenterteilung: **19.03.1997**
(21) Anmeldenummer: 94107210.0
(22) Anmeldetag: 09.05.1994
(51) Int. Cl.: B60R 22/46

(54) **Gurtaufroller für Fahrzeugsicherheitsgurtsysteme**
Seat belt retractor for vehicle safety belt systems
Enrouleur de ceinture pour systèmes de ceinture de sécurité pour véhicules

(30) Priorität: 09.06.1993 DE 4319273
(43) Veröffentlichungstag der Anmeldung: 14.12.1994
(73) Patentinhaber: TRW Occupant Restraint Systems GmbH, 73553 Alfdorf (DE)
(72) Erfinder: Schmid, Johannes, D-73527 Schwäbisch Gmünd-Hussenhofen (DE); Mödinger, Thomas, D-73553 Alfdorf-Vordersteinenberg (DE)
(74) Vertreter: Degwert, Hartmut, Dipl.-Phys.

(56) Entgegenhaltungen:
- EP-A- 0 581 288
- WO-A-87/00809
- DE-A- 2 505 626
- DE-U- 9 217 298
- GB-A- 2 237 978
- PATENT ABSTRACTS OF JAPAN vol. 9, no. 249 (M-419) (1972) 5. Oktober 1985 & JP-A-60 099 741 (NIPPON JIDOSHA BUHIN SOGO KENKYUSHO KK) 3. Juni 1985
- PATENT ABSTRACTS OF JAPAN vol. 15, no. 468 (M-1184) 27. November 1991 & JP-A-03 200 454 (TAKATA K.K.) 2. September 1991
- PATENT ABSTRACTS OF JAPAN vol. 10, no. 109 (M-472) 23. April 1986 & JP-A-60 240 549 (NISSAN JIDOSHA K.K.) 29. November 1985

## Beschreibung

Die Erfindung betrifft einen Gurtaufroller für Fahrzeugsicherheitsgurtsysteme, mit einem an der Gurtspule angreifenden rotatorischen Gurtstrafferantrieb.

Aus der DE 32 15 925 A1 ist ein Gurtaufroller bekannt, dessen Gurtstraffer einen über ein Zugseil an der Gurtspule angreifenden Drehkolben-Rotationsantrieb mit einem Gasgenerator aufweist. Der Rotationsantrieb besteht aus einem Zylinder und einem darin drehbar gelagerten Drehkolben, der mit einer Aufrollseilscheibe fest verbunden ist. In der Aufrollseilscheibe ist das Zugseil verankert, das von der Aufrollseilscheibe zu einer an die Gurtspule triebschlüssig angeschlossenen Abrollseilscheibe läuft. Um diese Abrollseilscheibe ist das Zugseil mehrfach herumgeschlungen und daran verankert. Bei Aktivierung des Drehkolben-Rotationsantriebs des Gurtstraffers wird die Aufrollseilseheibe gedreht, das Zugseil unter Drehen der Abrollseilseheibe von dieser abgezogen und auf die Aufrollseilscheibe aufgewickelt. Durch die Drehung der Abrollseilscheibe wird die Gurtspule in Gurtbandaufwickelrichtung gedreht und die Gurtlose beseitigt. Die Übertragung der Kolbenbewegung auf die Gurtspule mittels Zugseil und Aufrollscheibe wird von erheblichen Verlusten begleitet, die durch eine größere Dimensionierung des Gasgenerators ausgeglichen werden müssen. Diese Anordnung erfordert zudem viel Bauraum.

Ein Gurtaufroller mit Planetengetriebe ist aus der EP-A-0 581 288 bekannt. Diese Druckschrift fällt unter Artikel 54 (3) EPÜ und ist daher nur insofern zum Stand der Technik zu rechnen, als die Neuheit der Erfindung betroffen ist. Der in dieser Druckschrift beschriebene Gurtstrafferantrieb weist eine beim Ansprechen eines Beschleunigungssensors auslösbare Druckquelle, einen im wesentlichen teilkreisförmigen Planetenrad-Laufraum und ein darin enthaltenes Planetenzahnrad auf, das radial innen mit einem zentralen Sonnenrad kämmt und radial außen mit einem feststehenden Innenzahnkranz kämmt. Das Planetenzahnrad bildet hierbei das Dichtmittel und wird durch den sich nach Auslösung der Druckquelle im Laufraum aufbauenden Druck auf seiner Bahn um das Sonnenrad bewegt.

Erfindungsgemäß wird ein Gurtaufroller für Fahrzeugsicherheitsgurtsysteme der eingangs erwähnten Art geschaffen, bei dem in den Kraftfluß zwischen dem Gurtstrafferantrieb und der Gurtspule ein ins Schnelle übersetzendes Planetengetriebe mit einem Planetenradträger eingefügt ist.

Dadurch werden im wesentlichen eine verlustarme Übertragung und Übersetzung der Antriebsbewegung des Gurtstrafferantriebs auf die Gurtspule gewährleistet. Des weiteren wird innerhalb bestehender Gurtaufrollergeometrien ohne größeren Aufwand eine günstigere Anordnung des Gurtstrafferantriebs zur Gurtspule ermöglicht. Die aus dem Gurtaufroller und dem Gurtstraffer bestehende erfindungsgemäße Baugruppe beansprucht kaum mehr Bauraum als ein Gurtaufroller von gleicher Bauart, aber ohne Gurtstraffer. Das Planetengetriebe gewährleistet zudem einen hohen Wirkungsgrad der Übertragung der Antriebsbewegung des Gurtstraffers. Durch die Übersetzung wird weiterhin auf einfache Weise ein großer Strafferhub bei geringem Arbeitshub des Strafferantriebs ermöglicht.

Gemäß einer vorteilhaften Ausführungsform der Erfindung besteht das Planetengetriebe aus einem Hohlrad mit Innenverzahnung, Planetenrädern, einem Planetenträger und einem Sonnenrad, wobei die Planetenräder in die Innenverzahnung des Hohlrads und in die Außenverzahnung des Sonnenrads eingreifen.

Für eine kompaktere Ausbildung des Gurtaufrollers ist es zweckmäßig, wenn der Gurtstrafferantrieb als Drehkolben-Rotationsantrieb mit einem Gasgenerator ausgebildet ist und ein an das Hohlrad angeschlossenes Antriebsteil aufweist, das Sonnenrad des Planetengetriebes mit der Gurtspule triebschlüssig kuppelbar ist und der Planetenträger gehäusefest angeordnet ist. Dabei ist beispielsweise am Außenumfang des Hohlrades ein Drehkolbenansatz angeformt, der mit dem Hohlrad einen Einflügeldrehkolben bildet und der in einem das Hohlrad umgebenden Ringraum umläuft.

Weitere Merkmale und Vorteile der Erfindung ergeben sich aus der folgenden Beschreibung einer vorteilhaften Ausführungsform unter Bezugnahme auf die Zeichnung. Es zeigen:
- Fig. 1: eine perspektivische Ansicht eines Gurtaufrollers gemäß einer Ausfüh rungsform der vorliegenden Erfindung;
- Fig. 2 und 3: eine schematische Schnittansicht durch den Gurtstrafferantrieb von Fig. 1 in unterschiedlichen Zuständen;
- Fig. 4: eine schematische, perspektivische Explosionsdarstellung eines Teils des Gurtaufrollers von Fig. 1 mit Gurtband; und
- Fig. 5: eine schematische, perspektivische Explosionsdarstellung eines Teils des Gurtaufrollers von Fig. 1 ohne Gurtband und Gurtspulengehäuse.

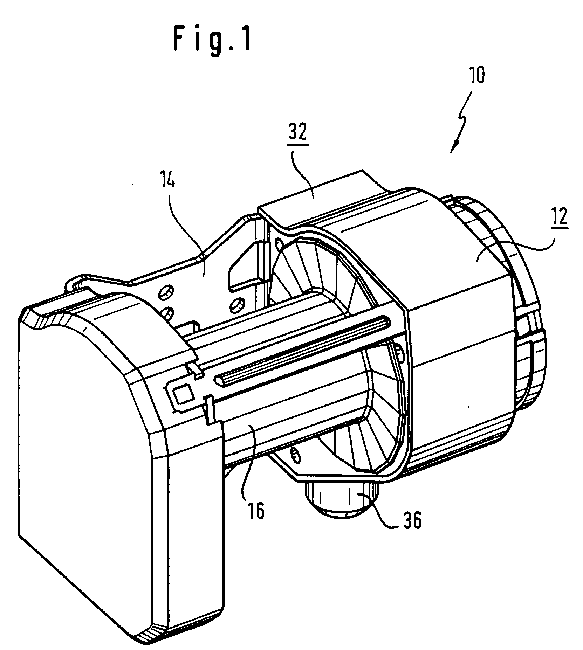

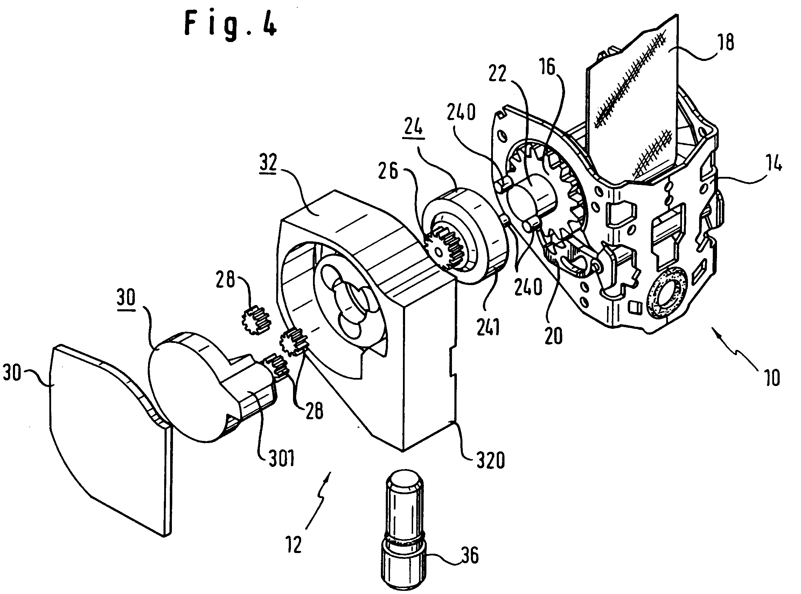

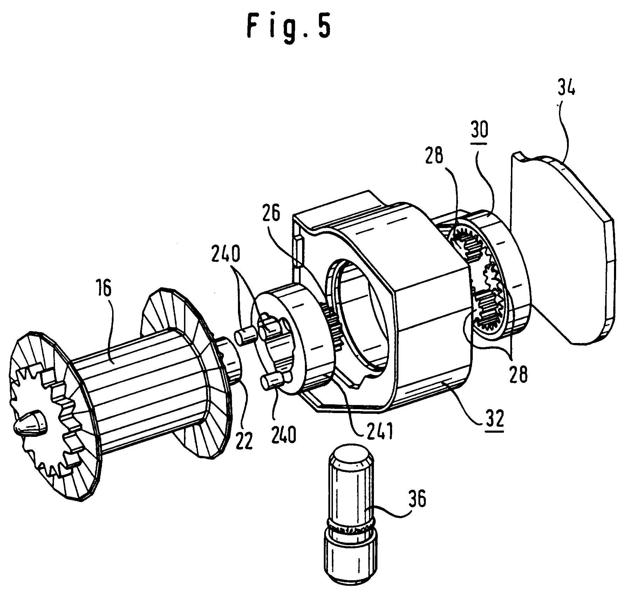

Bei der in den Figuren 1 bis 5 gezeigten Ausführungsform eines Gurtaufrollers 10 eines Sicherheitsgurtsystems für Fahrzeuge mit einem Gurtstrafferantrieb 12 ist zwischen den Schenkeln eines lasttragenden Gehäuses 14 eine Gurtspule 16 drehbar gelagert. Auf die Gurtspule 16 wird ein Gurtband 18 (Fig. 4) aufgewickelt.

An der in Fig. 1 linken Seite des Gehäuses 14 befinden sich ein herkömmlicher, daher nicht dargestellter Ansteuermechanismus für die Gurtspulenblockierung und eine am Ende der Gurtspule 16 angreifende Aufrollfeder, welche die Gurtspule 16 in Gurtbandaufwickelrichtung beaufschlagt. Eine Sperrklinke 20 (Fig. 4) blockiert die Drehung der Gurtspule 16 in Gurtbandabwickelrichtung fahrzeugsensitiv und/oder gurtbandsensitiv.

Auf der gegenüberliegenden Seite des Gehäuses 14 befinden sich die Funktionsteile, die für die Gurtstraffertunktion benötigt werden.

Hierzu gehören eine an einem Fortsatz 22 der Gurtspule 16 angreifende Klemmrollenkupplung 24, ein an die Kremmrollenkupplung 24 angeschlossenes Sonnenrad 26 eines Planetengetriebes, drei in das Sonnenrad 26 eingreifende Planetenräder 28, ein Hohlrad 30 mit Innenverzahnung, die in die Planetenräder 28 eingreift, und ein Antriebsblock 32 mit einer zylindrischer Ausnehmung als Teil eines Drehkolben-Rotationsantriebs mit einer Abdeckung 34. Der Fortsatz 22 der Gurtspule 16, die Klemmrollenkupplung 24, das Sonnenrad 26, der Antriebsblock 32 sowie das Hohlrad 30 sind jeweils koaxial angeordnet. Der Antriebsblock 32 weist einen Gehäuseteil 320 auf, in dem eine Bohrung 35 zur Aufnahme eines pyrotechnischen Gasgenerators 36 vorgesehen ist. Das Hohlrad 30 ist koaxial in der zylindrischen Ausnehmung des Antriebsblocks 32 angeordnet und begrenzt diese radial einwärts, wodurch ein Ringraum gebildet ist. An der Außenseite des Hohlrads 30 ist ein Drehkolbenansatz 301 als Teil des Rotationsantriebs angeformt, der sich radial nach außen bis zur Mantelfläche der zylindrischen Ausnehmung des Antriebsblocks 32 erstreckt. Der Drehkolbenansatz 301 bildet somit mit dem Hohlrad 30 einen Einflügeldrehkolben, der in dem das Hohlrad umgebenden Ringraum umläuft. Eine Trennwand 38 verläuft von der zylindrischen Innenwandung des Antriebsblocks 32 bis zum Hohlrad 30. Der Ringraum ist somit zwischen dem Drehkolbenansatz 301 und der Trennwand 38 in zwei Ringkammerbereiche 321 und 322 geteilt. Der erste Ringkammerbereich 321 erweitert sich bereichsweise in Richtung auf den Gasgenerator 36, so daß die Gasauslaßöffnungen des Gasgenerators 36 mit der ersten Ringkammer 321 in Strömungsverbindung stehen.

Unmittelbar neben der Trennwand 38 in der zweiten Ringkämmer 322 ist eine Auslaßöffnung 40 vorgesehen. Die Auslaßöffnung 40 verläuft von der zweiten Ringkämmer 322 bis zur Außenfläche des Antriebsblocks 32 und ermöglicht einen Gasstrom aus der zweiten Ringkammer 322 in die Umgebung und umgekehrt, wenn der aus dem Hohlraum 30 und dem Drehkolbenansatz 301 bestehende Einflügeldrehkolben bewegt wird.

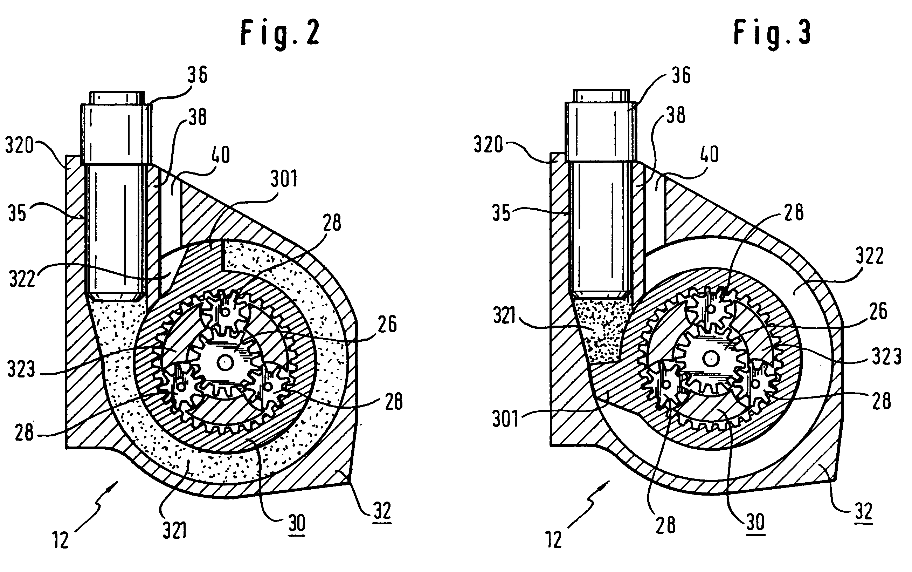

Wie den Figuren 2 und 3 zu entnehmen ist, sind die Planetenräder 28 um das Sonnenrad 26 herum zueinander gleichmäßig beabstandet angeordnet. Die Planetenräder 28 sind in Ausnehmungen eines Plantenträgers 323 eingesetzt, so daß die Planetenräder 28 ortsfest gelagert sind und sich die Achsen des Sonnenrads 26, der Planetenräder 28 und des Hohlrads 30 nicht relativ zueinander bewegen. Die Innenverzahnung des Hohlrads 30, die Größe der Planetenräder 28 sowie des Sonnenrads 26 sind so gewählt, daß bei Drehbewegung des Hohlrads 30 die Bewegung auf das Sonnenrad 26 mit der gewünschten Übersetzung übertragen wird.

Das Sonnenrad 26 ist einstückig mit einem glockenförmigen Teil 241 der Klemmrollenkupplung 24 ausgebildet, wobei die Klemmrollenkupplung 24 Klemmrollen 240 aufweist. Bei Aktivierung des Gurtstrafferantriebs 12 durch Drehung des Hohlrads 30, das sich in Eingriff mit den Planetenrädern 28 befindet und diese sich wiederum in Eingriff mit dem Sonnerad 26 befinden, werden die Klemmrollen 240 mit dem Fortsatz 22 der Gurtspule 16 in Eingriff gebracht. Auf diese Weise ist der Gurtstrafferantrieb 12 triebschlüssig an die Gurtspule 16 gekoppelt.

Für die Aktivierung des Gurtstrafferantriebs 12 wird der pyrotechnische Gasgenerator 36 mechanisch oder elektrisch gezündet, so daß Gase aus dem Gasgenerator 36 austreten und in die erste Ringkämmer 321 strömen. Die aus dem Gasgenerator 36 austretenden Gase beaufschlagen den Kolbenansatz 301 und treiben ihn durch den Ringraum. Durch die Auslaßöffnung 40 kann bei Drehen des Drehkolbenansatzes 301 die Luft aus dem Ringkammerbereich 322 entweichen. Das Hohlrad 30 wird nun mit dem Drehkolbenansatz 301, also dem Einflügeldrehkolben, entgegen dem Uhrzeigersinn gemäß den Figuren 2 und 3 gedreht. Mit dem Drehen des Drehkolbenansatzes 301 und somit des Hohlrades 30 gegen den Uhrzeigersinn drehen sich auch die ortsfest gelagerten Planetenräder 28 ebenfalls gegen den Uhrzeigersinn. Demzufolge wird das Sonnenrad 26 im Uhrzeigersinn gemäß den Figuren 2 und 3 gedreht. Durch die dadurch erfolgende Drehung des glockenförmigen Teils 241 der Klemmrollenkupplung 24 werden die Klemmrollen 240 in Kupplungseingriff mit dem zylindrischen Fortsatz 22 der Gurtspule 16 gebracht, so daß der glockenförmige Teil 241 und somit das Sonnenrad 26 und der Kupplungsfortsatz 22 drehfest miteinander verbunden sind. Bei einer Drehung des Hohlrads 30 wird die Gurtspule 16 in Gurtaufrollrichtung gedreht und die Gurtlose entfernt.

Nach Beendigung des Gurtstraffervorgangs tritt die Sperrung der Gurtspule 16 mittels der Sperrklinke 20 ein. Die sich aufgrund ihrer Massenträgheit weiterbewegenden Klemmrollen 240 lösen sich aus dem Klemmeingriff mit dem Fortsatz 22 der Gurtspule 16, so daß die Funktion des Sperrsystems nicht beeinträchtigt wird.

Durch die koaxiale Anordnung der Antriebsteile des Drehkolben-Rotationsantriebs und den Einbau eines Planetengetriebes werden eine günstige Kraftübertragung bei geringen Verlusten sowie eine kompakte Bauweise ermöglicht. Weiterhin wird auf einfache Weise ein großer Strafferhub bei geringem Arbeitshub des Drehantriebs erreicht. Die herkömmliche fahrzeug- und gurtbandsensitive Sperrfunktion der Blockierautomatik sowie die Freigängigkeit bzw. die Aufrollfunktion des Gurtaufrollers 10 werden durch die Strafferfunktion nicht beeinträchtigt, da die Klemmrollenkupplung 24 den Gurtstrafferantrieb 12 nach erfolgter Straffung wieder von der Gurtspule 16 abkoppelt.

## Patentansprüche

1. Gurtaufroller (10) für Fahrzeugsicherheitsgurtsysteme, mit einem an der Gurtspule (16) angreifenden rotatorischen Gurtstrafferantrieb (12), **dadurch gekennzeichnet**, daß in den Kraftfluß zwischen dem Gurtstrafferantrieb (12) und der Gurtspule (16) ein ins Schnelle übersetzendes Planetengetriebe (26, 28, 30) mit einem Planetenradträger (323) eingefügt ist.

2. Gurtaufroller nach Anspruch 1, **dadurch gekennzeichnet**, daß das Planetengetriebe aus einem Hohlrad (30) mit Innenverzahnung, Planetenrädern (28), dem Planetenradträger (323) und einem Sonnenrad (26) besteht, wobei die Planetenräder (28) in die Innenverzahnung des Hohlrads (30) und in die Außenverzahnung des Sonnenrads (26) eingreifen.

3. Gurtaufroller nach Anspruch 2, **dadurch gekennzeichnet**, daß der Gurtstrafferantrieb (12) ein an das Hohlrad (30) triebschlüssig angekoppeltes Antriebsteil aufweist, daß das Sonnenrad (26) des Planetengetriebes mit der Gurtspule (16) triebschlüssig kuppelbar ist, und daß der Planetenradträger (323) gehäusefest angeordnet ist.

4. Gurtaufroller nach Anspruch 3, **dadurch gekennzeichnet**, daß das Antriebsteil durch einen Drehkolben (301) eines Drehkolben-Rotationsantriebs mit einem Gasgenerator (36) gebildet ist.

5. Gurtaufroller nach Anspruch 4, **dadurch gekennzeichnet**, daß am Außenumfang des Hohlrades (30) ein Drehkolbenansatz (301) gebildet ist, der mit dem Hohlrad (30) einen Einflügeldrehkolben bildet, der in einem das Hohlrad (30) umgebenden Ringraum (321, 322) umläuft.

6. Gurtaufroller nach einem der Ansprüche 4 und 5, **gekennzeichnet durch** einen pyrotechnischen Gasgenerator (36).

7. Gurtaufroller nach einem der Ansprüche 4 bis 6, **dadurch gekennzeichnet**, daß zwischen Gurtspule (16) und Sonnenrad (26) eine Klemmrollenkupplung (24, 40, 241) eingefügt ist.

8. Gurtaufroller nach einem der vorangehenden Ansprüche, **dadurch gekennzeichnet**, daß das Planetengetriebe mit drei Planetenrädern (28) versehen ist.

9. Gurtaufroller nach einem der Ansprüche 2 bis 8, **dadurch gekennzeichnet**, daß die Planetenräder (28) in Ausnehmungen des Planetenradträgers (323) eingesetzt sind.

## Claims

1. A belt retractor (10) for vehicular seat belt systems having a rotational belt tensioner drive (12) engaging the belt reel (16), characterized by a speed-up planetary gearing (26, 28, 30) being inserted in the force flow between the belt tensioner drive (12) and the belt reel (16), said speed-up gearing comprising a planetary gear carrier (323).

2. A belt retractor as set forth in claim 1, characterized by the planetary gearing comprising an internally toothed ring gear (30), planetary gears (28), the planetary gear carrier (323) and a sun gear (26), said planetary gears (28) engaging the internal toothing of said ring gear (30) and the outer toothing of said sun gear (26).

3. A belt retractor as set forth in claim 2, characterized in that said belt tensioner drive (12) has a drive part drivingly coupled to said ring gear (30), in that said sun gear (26) of said planetary gearing can be drivingly coupled to said belt reel (16) and in that said planetary gear carrier (323) is fixed with the retractor housing.

4. A belt retractor as set forth in claim 3, characterized by said drive part being formed by a rotary piston (301) of a rotary-piston rotational drive with a gas generator (36).

5. A belt retractor as set forth in claim 4, characterized by an extension of a rotary piston (301) being formed on the outer circumference of said ring gear (30), said extension forming together with said ring gear (30) a single-vane rotary piston orbiting in a ring-shaped space (321, 322) surrounding said ring gear (30).

6. A belt retractor as set forth in claims 4 and 5, characterized by a pyrotechnical gas generator (36).

7. A belt retractor as set forth in claims 4 to 6, characterized by a clamping roller coupling (24, 40, 241) being inserted between said belt reel (16) and said sun gear (26).

8. A belt retractor as set forth in any preceding claims, characterized by said planetary gearing being provided with three planetary gears (28).

9. A belt retractor as set forth in claims 2 to 8, characterized by said planetary gears (28) being inserted in recesses in said planetary gear carrier (323).

## Revendications

1. Enrouleur de ceinture (10) pour systèmes de ceinture de sécurité de véhicules, comprenant un dispositif d'entraînement rotatif (12) du tendeur de ceinture, qui agit sur la bobine (16) de la ceinture, caractérisé en ce qu'un engrenage planétaire (26, 28, 30) à effet multiplicateur associé à un porte-pignons planétaires (323) est inséré dans le flux de forces entre le dispositif d'entraînement (12) du tendeur de ceinture et la bobine (16) de la ceinture.

2. Enrouleur de ceinture selon la revendication 1, caractérisé en ce que l'engrenage planétaire est constitué d'une roue creuse (30) à denture intérieure, de pignons planétaires (28), d'un porte-pignons planétaires (323) et d'une roue solaire (26), les pignons planétaires (28) s'engrenant dans la denture intérieure de la roue creuse (30) et dans la denture extérieure de la roue solaire (26).

3. Enrouleur de ceinture selon la revendication 2, caractérisé en ce que le dispositif d'entraînement (12) du tendeur de ceinture comporte une pièce d'entraînement accouplée à la roue creuse (30) en formant une liaison d'entraînement, en ce que la roue solaire (26) de l'engrenage planétaire peut être accouplée à la bobine (16) de la ceinture en formant une liaison d'entraînement, et en ce que le porte-pignons planétaires (323) est solidaire du boîtier.

4. Enrouleur de ceinture selon la revendication 3, caractérisé en ce que la pièce d'entraînement est formée par un piston tournant (301) d'un dispositif d'entraînement en rotation à piston tournant comprenant un générateur de gaz (36).

5. Enrouleur de ceinture selon la revendication 4, caractérisé en ce que sur la périphérie extérieure de la roue creuse (30) est prévu un talon formant piston tournant (301) qui, avec la roue creuse (30), forme un piston tournant à ailette unique qui tourne dans une chambre annulaire (321, 322) entourant la roue creuse (30).

6. Enrouleur de ceinture selon l'une des revendications 4 et 5, caractérisé par un générateur pyrotechnique de gaz (36).

7. Enrouleur de ceinture selon l'une des revendications 4 à 6, caractérisé en ce qu'un embrayage à roue libre (24, 40, 241) est inséré entre la bobine (16) de la ceinture et la roue solaire (26).

8. Enrouleur de ceinture selon l'une des revendications précédentes, caractérisé en ce que l'engrenage planétaire est muni de trois pignons planétaires (28).

9. Enrouleur de ceinture selon l'une des revendications 2 à 8, caractérisé en ce que les pignons planétaires (28) sont logés dans des évidements du porte-pignons planétaires (323).
